# EUROPEAN PATENT APPLICATION

(11) **EP 4 729 391 A1**
(43) Date of publication of application: **22.04.2026**
(21) Application number: 23941635.7
(22) Date of filing: 16.06.2023
(51) Int. Cl.: B62D 6/00, B62D 5/04

(54) **STEERING CONTROL DEVICE AND STEERING CONTROL METHOD**

(71) Applicant: JTEKT CORPORATION, Kariya-shi, Aichi 448-8652 (JP)
(72) Inventor: INDEN, Yuki, Kariya-shi, Aichi 448-8652 (JP)
(74) Representative: Winter, Brandl - Partnerschaft mbB
(86) International application number: PCT/JP2023/022404
(87) International publication number: WO 2024/257333

(57) **Abstract**

A steering control device (40) is configured to execute a feedback process, an operation process, and a reduction process. The feedback process is a process of calculating a feedback manipulated variable. The feedback manipulated variable is a manipulated variable of feedback control in which a detected value of steering torque is a controlled variable. The steering torque is torque input by a driver to a steering system. The operation process is a process of controlling torque of a motor of the steering system using the feedback manipulated variable as an input. The reduction process is a process of reducing an absolute value of the feedback manipulated variable when the magnitude of target steering torque is greater than or equal to a predetermined value. The target steering torque is a target value of the steering torque.

## Description

### TECHNICAL FIELD

The present disclosure relates to steering control devices and steering control methods.

### BACKGROUND ART

For example, Patent Document 1 below discloses a steering control device that assists steering of steered wheels in accordance with a manipulated variable of feedback control in which a detected value of steering torque is a controlled variable.

### Related Art Documents

### Patent Documents

Patent Document 1: Japanese Unexamined Patent Application Publication No. 2004-203089 (JP 2004-203089 A)

### SUMMARY OF THE INVENTION

### Problem to be Solved by the Invention

However, there is a limit to the range in which a sensor for detecting steering torque can correctly detect the steering torque. Therefore, when an absolute value of actual steering torque is excessively large, it is not possible to obtain a correct value as the controlled variable of the above feedback control. As a result, there is a possibility that torque of a motor may be controlled based on a value that is inappropriate as the manipulated variable of the feedback control.

### Means for Solving the Problem

One positional aspect of the present disclosure provides a steering control device. The steering control device is configured to execute a feedback process, an operation process, and a reduction process. The feedback process is a process of calculating a feedback manipulated variable. The feedback manipulated variable is a manipulated variable of feedback control in which a detected value of steering torque is a controlled variable. The steering torque is torque input by a driver to a steering system. The operation process is a process of controlling torque of a motor of the steering system using the feedback manipulated variable as an input. The reduction process is a process of reducing an absolute value of the feedback manipulated variable when the magnitude of target steering torque is greater than or equal to a predetermined value. The target steering torque is a target value of the steering torque.

Another aspect of the present disclosure provides a steering control method. The steering control method includes executing a feedback process, an operation process, and a reduction process. The feedback process is a process of calculating a feedback manipulated variable. The feedback manipulated variable is a manipulated variable of feedback control in which a detected value of steering torque is a controlled variable. The steering torque is torque input by a driver to a steering system. The operation process is a process of controlling torque of a motor of the steering system using the feedback manipulated variable as an input. The reduction process is a process of reducing an absolute value of the feedback manipulated variable when the magnitude of target steering torque is greater than or equal to a predetermined value. The target steering torque is a target value of the steering torque.

### BRIEF DESCRIPTION OF THE DRAWINGS

[FIG. 1] is a diagram showing the configuration of a steering control device and a steering system according to a first embodiment.
[FIG. 2] is a block diagram showing processes executed by the steering control device of FIG. 1.
[FIG. 3] is a diagram showing gains adjusted by a gain adjustment process in FIG. 2;
[FIG. 4] is a diagram showing the configuration of a steering control device and a steering system according to a second embodiment.
[FIG. 5] is a block diagram showing processes executed by the steering control device of FIG. 4.

### MODES FOR CARRYING OUT THE INVENTION

### <First Embodiment>

A first embodiment will be described below with reference to the drawings.

### "Prerequisite Configuration"

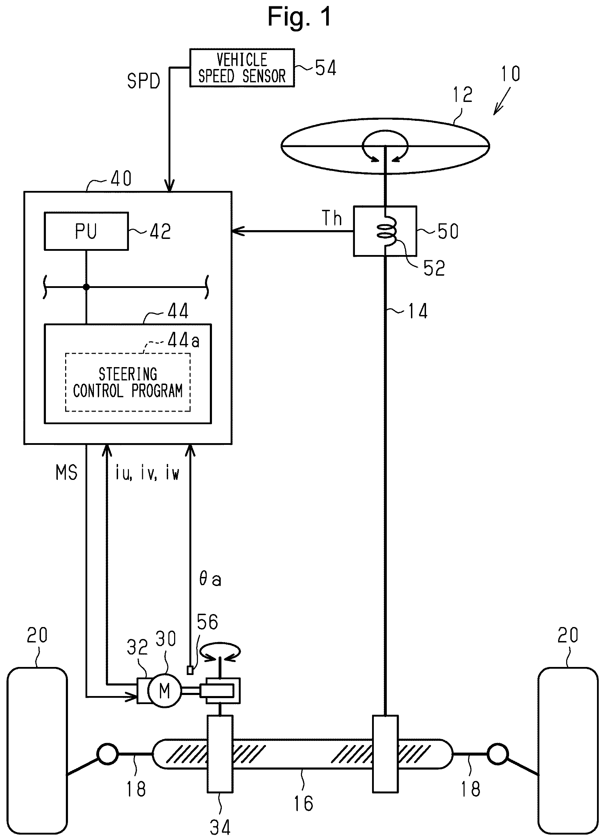

As shown in FIG. 1, a steering system 10 includes a steering wheel 12. The steering wheel 12 is a means by which a driver transmits a steering intention. A transmission shaft 14 is connected to the steering wheel 12. Therefore, when the steering wheel 12 rotates, the transmission shaft 14 rotates integrally therewith. The rotational power of the transmission shaft 14 is transmitted to a steered shaft 16. The steered shaft 16 extends in a vehicle width direction (left-right direction in FIG. 1). Steered wheels 20 are connected to both ends of the steered shaft 16 via tie rods 18.

The transmission shaft 14 is provided so as to intersect the steered shaft 16. The transmission shaft 14 and the steered shaft 16 have teeth that mesh with each other. These teeth mesh with each other, thereby enabling transmission of power from the transmission shaft 14 to the steered shaft 16. That is, the rotational power of the transmission shaft 14 is converted to axial displacement power of the steered shaft 16. Axial displacement of the steered shaft 16 is transmitted to the steered wheels 20 via the tie rods 18. The steered angle of the steered wheels 20 is thus changed. The steered angle refers to the tuming angle of tires.

The steering system 10 further includes an assist motor 30. The assist motor 30 generates an assisting force that is a force for assisting the driver in steering. The rotational power of the assist motor 30 is applied to a drive shaft 34. The drive shaft 34 and the steered shaft 16 have teeth that mesh with each other. These teeth mesh with each other, thereby enabling transmission of power from the drive shaft 34 to the steered shaft 16. That is, the rotational power of the drive shaft 34 is converted to axial displacement power of the steered shaft 16. The rotational power of the assist motor 30 is thus converted to the axial displacement power of the steered shaft 16 via the drive shaft 34. Specifically, the assist motor 30 is, for example, a three-phase brushless motor. An output voltage of an inverter 32 is applied to the terminals of the assist motor 30.

A steering control device 40 controls a controlled variable of the steering system 10 that is a controlled object. The steering control device 40 references steering torque Th input to the steering wheel 12, in order to control the controlled variable. The steering torque Th is detected by a torque sensor 50. The torque sensor 50 is a sensor that detects the steering torque Th in accordance with the degree of twist of a torsion bar 52 that is part of the transmission shaft 14. The steering control device 40 references a vehicle speed SPD detected by a vehicle speed sensor 54. The steering control device 40 references a rotation angle θa of the assist motor 30 detected by a rotation angle sensor 56. The steering control device 40 references currents iu, iv, iw flowing through the assist motor 30.

The steering control device 40 includes a PU 42 and a storage device 44. The PU 42 is a software processing device such as a CPU, a GPU, and a TPU. The storage device 44 includes a storage medium such an electrically rewritable nonvolatile memory and a disk medium. The storage device 44 stores a steering control program 44a. The steering control device 40 controls the controlled variable by the PU 42 executing the steering control program 44a stored in the storage device 44.

### "Processes Executed by Steering Control Device 40"

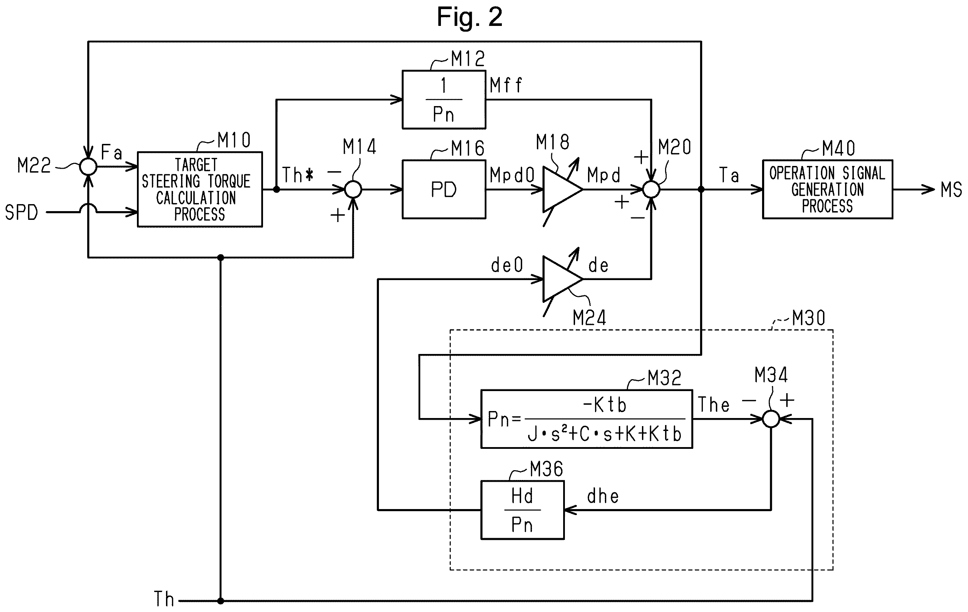

FIG. 2 shows processes executed by the steering control device 40. The processes shown in FIG. 2 are implemented by the PU 42 executing the steering control program 44a at, for example, a predetermined cycle.

A target steering torque calculation process M10 is a process of calculating target steering torque Th*, namely a target value of the steering torque Th, based on an axial force Fa. The axial force Fa is a force applied to the steered shaft 16. The axial force Fa is an amount converted to torque of the transmission shaft 14. The target steering torque calculation process M10 includes a process of setting the target steering torque Th* to different values in accordance with the vehicle speed SPD, even when the axial force Fa is the same. This setting is intended to give the driver an optimal steering feel according to the vehicle speed SPD.

An open-loop manipulated variable calculation process M12 is a process of calculating an open-loop manipulated variable Mff. The open-loop manipulated variable Mff is a manipulated variable of open-loop control in which the steering torque Th is used as a controlled variable and the target steering torque Th* is used as a target value of the controlled variable. The open-loop manipulated variable calculation process M12 is a process of calculating the open-loop manipulated variable Mff in response to input of the target steering torque Th*. The open-loop manipulated variable calculation process M12 calculates the open-loop manipulated variable Mff based on an inverse model of a nominal model Pn. The nominal model Pn is a model that uses, as an input, assist torque Ta that is torque of the assist motor 30, and outputs estimated steering torque The that is an estimated value of the steering torque Th. The assist torque Ta herein refers to a value converted to torque of the transmission shaft 14. The inverse model is a model that uses, as an input, the estimated steering torque The and outputs the assist torque Ta.

A deviation calculation process M14 is a process of calculating a deviation that is a value obtained by subtracting the target steering torque Th* from the steering torque Th. A PD manipulated variable calculation process M16 is a process of calculating a PD manipulated variable Mpd0 using the deviation as an input. The PD manipulated variable Mpd0 is a manipulated variable of feedback control in which the steering torque Th is a controlled variable and the target steering torque Th* is a target value of the controlled variable. The PD manipulated variable Mpd0 is the sum of an output value of a proportional element to which the deviation is input and an output value of a derivative element to which the deviation is input. The PD manipulated variable Mpd0 is a value converted to torque of the transmission shaft 14. Specifically, the PD manipulated variable calculation process M16 includes a process of changing either or both of a gain of the proportional element and a gain of the derivative element in accordance with the vehicle speed SPD.

A gain adjustment process M18 is a process of assigning to a PD manipulated variable Mpd a value obtained by multiplying the PD manipulated variable Mpd0 by a gain Kpd. A torque command value calculation process M20 is a process that uses, as inputs, the open-loop manipulated variable Mff, the PD manipulated variable Mpd, and estimated second disturbance torque de, and outputs the assist torque Ta. Specifically, the torque command value calculation process M20 is a process of assigning to the assist torque Ta a value obtained by subtracting the estimated second disturbance torque de from the sum of the open-loop manipulated variable Mff and the PD manipulated variable Mpd.

The assist torque Ta is input to an axial force calculation process M22. The axial force calculation process M22 is a process of assigning the sum of the assist torque Ta and the steering torque Th to the axial force Fa. The assist torque Ta is input to a disturbance observer M30. The disturbance observer M30 includes a steering torque estimation process M32, a first disturbance calculation process M34, and a second disturbance calculation process M36.

The steering torque estimation process M32 is a process of outputting the estimated steering torque The by inputting the assist torque Ta to the nominal model Pn. The estimated steering torque The is steering torque assumed by the nominal model Pn.

The first disturbance calculation process M34 is a process of calculating estimated first disturbance torque dhe. The estimated first disturbance torque dhe is a disturbance component of the steering torque Th of an actual controlled object. The estimated first disturbance torque dhe is the difference between actual torque and the torque estimated from the nominal model Pn. In other words, the estimated first disturbance torque dhe is the difference between the steering torque assumed by the nominal model Pn and the actual steering torque Th. Specifically, the first disturbance calculation process M34 is a process of assigning to the estimated first disturbance torque dhe a value obtained by subtracting the estimated steering torque The from the steering torque Th.

The second disturbance calculation process M36 is a process that uses, as an input, the estimated first disturbance torque dhe and outputs an estimated second disturbance torque de0. The estimated second disturbance torque de0 is disturbance torque converted to the torque of the assist motor 30. The second disturbance calculation process M36 is a process of calculating the estimated second disturbance torque de0 using the inverse model of the nominal model Pn and a filter Hd.

The filter Hd is provided to reduce noise caused by differentiation operations included in the nominal model Pn. In the present embodiment, the filter Hd is, for example, a third-order low-pass filter.

Again adjustment process M24 is a process of assigning to the estimated second disturbance torque de a value obtained by multiplying the estimated second disturbance torque de0 by a gain Kimc. As described above, the assist torque Ta is a value obtained by subtracting the estimated second disturbance torque de from the sum of the open-loop manipulated variable Mff and the PD manipulated variable Mpd. On the other hand, the estimated second disturbance torque de is an amount obtained by converting the difference between the steering torque assumed by the nominal model Pn and the actual steering torque Th to the torque of the assist motor 30. This means that the estimated second disturbance torque de is an amount corresponding to the difference between the steering torque assumed by the nominal model Pn and the actual steering torque Th. Therefore, the assist torque Ta is an amount obtained by correcting the sum of the open-loop manipulated variable Mff and the PD manipulated variable Mpd with a correction amount corresponding to the difference between the steering torque assumed by the nominal model Pn and the actual steering torque Th.

An operation signal generation process M40 is a process of operating the inverter 32 by inputting the assist torque Ta. Specifically, the operation signal generation process M40 includes a process of calculating a manipulated variable of control in which the torque of the assist motor 30 is a controlled variable and the assist torque Ta is a target value of the controlled variable. The operation signal generation process M40 includes a process of operating the inverter 32 such that the same manipulated variable is obtained. The manipulated variable may be, for example, a time ratio of an on-time to one cycle of an on/off operation of a switching element of the inverter 32. FIG. 2 shows an operation signal MS for the inverter 32. However, the operation signal MS is actually an individual operation signal for each switching element of the inverter 32.

### "Regarding Gain Adjustment Process"

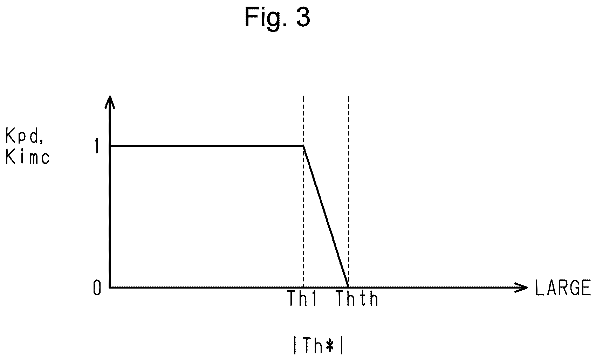

FIG. 3 shows the gains Kpd, Kimc adjusted by the gain adjustment processes M18, M24. As shown in FIG. 3, the gains Kpd, Kimc are set using, as an input, an absolute value of the target steering torque Th*. Specifically, when the absolute value of the target steering torque Th* is less than or equal to a threshold Th1, the PU 42 assigns "1" to the gains Kpd, Kimc. On the other hand, when the absolute value of the target steering torque Th* is greater than the threshold Th1 and less than or equal to an upper limit value Thth, the PU 42 changes the gains Kpd, Kimc in accordance with this absolute value. Specifically, the PU 52 changes the gains Kpd, Kimc in accordance with the absolute value, under the condition that the gains Kpd, Kimc when the absolute value is large are less than or equal to the gains Kpd, Kimc when the absolute value is small.

In the description of the present specification "changing B in accordance with A while satisfying a condition that B when A is large is less than or equal to B when A is small," the expressions "when A is large" and "when A is small" mean a relative magnitude relationship between the two when they are compared. For example, "when A is large" corresponds to a case where "A is a first value," and "when A is small" corresponds to a case where "A is a second value smaller than the first value." The above process means that, depending on the settings of the first value and the second value, B when A is the first value may be smaller than B when A is the second value.

Specifically, the PU 42 performs map calculation of the gains Kpd, Kimc in accordance with the absolute value of the target steering torque Th* with map data stored in advance in the storage device 44. The map data includes two sets of data. One is data in which an input variable is the absolute value of the target steering torque Th* and an output variable is the gain Kpd. The other is data in which an input variable is the absolute value of the target steering torque Th* and an output variable is the gain Kimc.

The upper limit value Thth is set in accordance with an upper limit value at which the steering torque Th can be detected by the torque sensor 50. Specifically, the upper limit value Thth may be equal to the upper limit value at which the steering torque Th can be detected by the torque sensor 50, or may be a value obtained by subtracting a predetermined margin amount from the upper limit value.

### <Functions and Effects of Embodiment>

The PU 42 determines the assist torque Ta in accordance with the PD manipulated variable Mpd0 that is a manipulated variable of feedback control in which the steering torque Th is a controlled variable. The detectable range of the torque sensor 50 is limited. Therefore, when the absolute value of the steering torque Th becomes excessively large, the steering torque Th detected by the torque sensor 50 may deviate from actual steering torque. In that case, the PD manipulated variable Mpd0 may not be an amount appropriate for bringing the steering torque Th closer to target steering torque Th*. Accordingly, in the above configuration, when the absolute value of the target steering torque Th* is greater than or equal to the upper limit value Thth, the PU 42 sets the PD manipulated variable Mpd to zero. This makes it possible to reduce the influence of the PD manipulated variable Mpd0 on the assist torque Ta when the PD manipulated variable Mpd0 is not a value appropriate for bringing the torque input to the steering wheel 12 closer to the target steering torque Th*.

The PU 42 also calculates the estimated second disturbance torque de0 in accordance with the difference between the output of the nominal model Pn and the steering torque Th. When the absolute value of the target steering torque Th* is greater than or equal to the upper limit value Thth, the PU 42 sets the estimated second disturbance torque de to zero. This makes it possible to reduce the influence of the estimated second disturbance torque de on the assist torque Ta when the estimated second disturbance torque de is not a value appropriate for bringing the torque input to the steering wheel 12 closer to the target steering torque Th*.

The above embodiment further has the following functions and effects.
(1-1) When the absolute value of the target steering torque Th* is greater than the threshold Th1 and less than or equal to the upper limit value Thth, the PU 42 causes the gains Kpd, Kimc to have a negative correlation with the absolute value of the target steering torque Th*. This makes it possible to reduce a change in the feedback manipulated variable, compared to a case where the gains Kpd, Kimc are set to either "1" or "0" depending on whether the absolute value is less than or equal to the upper limit value Thth, or is greater than the upper limit value Thth, Therefore, a rapid change in the assist torque Ta can be suppressed. The deviation calculation process M14, the PD manipulated variable calculation process M16, and the disturbance observer M30 all use the steering torque Th as an input. That is, these are processes in which the steering torque Th serving as a controlled variable is fed back.

(1-2) The PU 42 sets the assist torque Ta in accordance with the open-loop manipulated variable Mff in addition to the PD manipulated variable Mpd as a feedback manipulated variable and the estimated second disturbance torque de. Therefore, even if the gains Kpd, Kimc are reduced, it is possible to continue control in which the steering torque Th is the controlled variable.

### <Second Embodiment>

A second embodiment will be described below with reference to the drawings, focusing on the differences from the first embodiment.

### "Prerequisite Configuration"

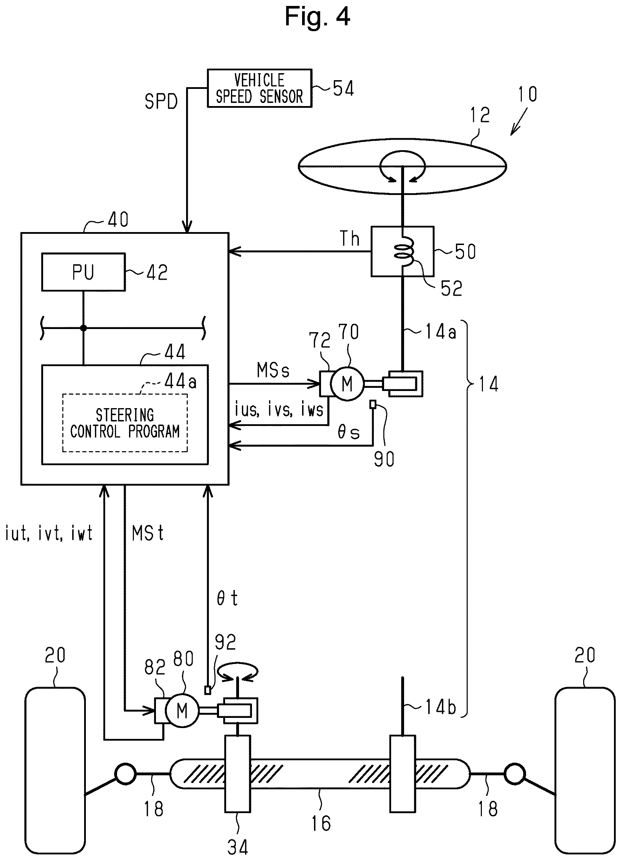

FIG. 4 shows the configuration of a steering control system according to the present embodiment. In FIG. 4, the members corresponding to those shown in FIG. 1 are denoted by the same signs for convenience.

As shown in FIG. 4, in the steering system 10, the transmission shaft 14 is separated into an input shaft 14a connected to the steering wheel 12 and an output shaft 14b engaged with the steered shaft 16. In the present embodiment, the output shaft 14b is actually not needed. However, the output shaft 14b is provided for convenience of the following description.

A reaction motor 70 is provided on the input shaft 14a. The reaction motor 70 is a motor for applying to the steering wheel 12 a reaction force that is torque in the opposite direction to that of torque input by the driver. The reaction motor 70 is, for example, a three-phase brushless motor. An output voltage of an inverter 72 is applied to the terminals of the reaction motor 70.

The torque of a steering motor 80 is applied to the steered shaft 16 via the drive shaft 34. The steering motor 80 is, for example, a three-phase brushless motor. An output voltage of an inverter 82 is applied to the terminals of the steering motor 80.

The steering system 10 is a controlled object of the steering control device 40. The steering control device 40 operates the inverter 72 to control the reaction force that is a controlled variable of the controlled object. The steering control device 40 operates the inverter 82 to control the steered angle of the steered wheels 20 that is a controlled variable of the controlled object.

The steering control device 40 references the rotation angle θs of the reaction motor 70 detected by a rotation angle sensor 90, in order to control the reaction force that is a controlled variable. The steering control device 40 references currents ius, ivs, iws flowing through the reaction motor 70, in order to control the reaction force. The steering control device 40 references the rotation angle θt of the steering motor 80 detected by a rotation angle sensor 92, in order to control the steered angle that is a controlled variable. The steering control device 40 references currents iut, ivt, iwt flowing through the steering motor 80, in order to control the steered angle.

### "Processes Executed by Steering Control Device 40"

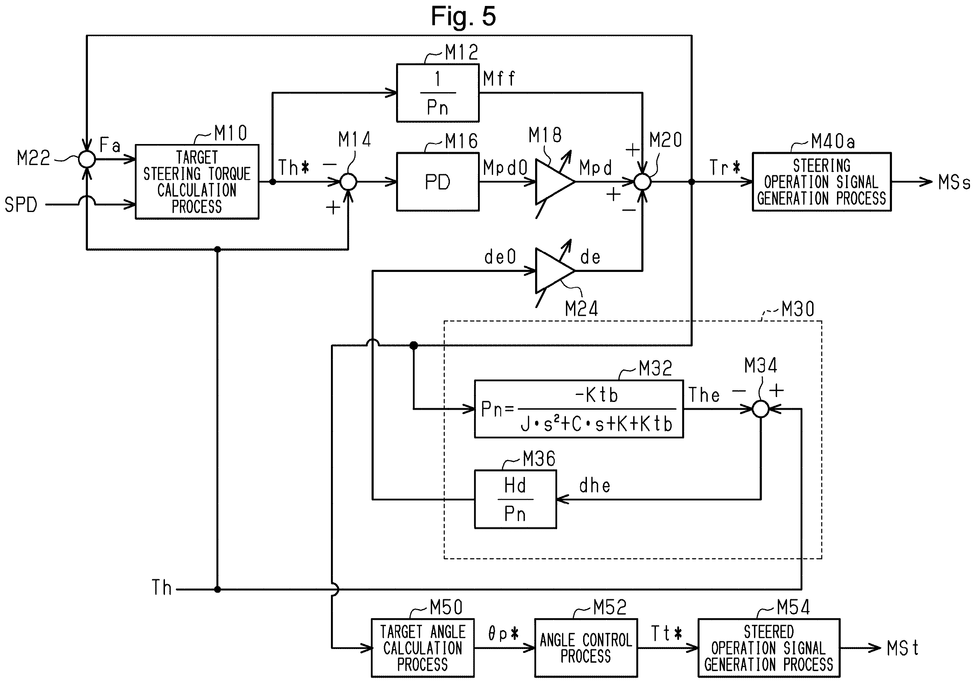

FIG. 5 shows processes executed by the steering control device 40. In other words, FIG. 5 shows processes executed by the steering control device 40 in a state in which transmission of power from the steering wheel 12 to the steered wheels 20 is disconnected. In FIG. 5, the processes corresponding to those shown in FIG. 2 are denoted by the same signs for convenience.

As shown in FIG. 5, the torque command value calculation process M20 is a process of outputting a reaction force command value Tr*. The torque command value calculation process M20 is a process of assigning to the reaction force command value Tr* a value obtained by subtracting the estimated second disturbance torque de from the sum of the open-loop manipulated variable Mff and the PD manipulated variable Mpd. The reaction force command value Tr is a command value of reaction torque to be applied to the steering wheel 12. The reaction force command value Tr* has been converted to an angle of the transmission shaft 14.

A steering operation signal generation process M40a is a process of operating the inverter 72 by inputting the reaction force command value Tr*. Specifically, the steering operation signal generation process M40a includes a process of calculating a manipulated variable of control in which the torque of the reaction motor 70 is a controlled variable and the reaction force command value Tr* is a target value of the controlled variable. The rotation angle θs and the currents ius, ivs, iws are referenced when calculating the manipulated variable. The steering operation signal generation process M40a includes a process of operating the inverter 72 in accordance with the manipulated variable. An operation signal MSs for the inverter 72 is shown in FIG. 5. However, the operation signal MSs is actually an individual operation signal for each switching element of the inverter 72.

A target angle calculation process M50 is a process of calculating a target angle θp* that is a target value of the rotation angle of the drive shaft 34. The rotation angle of the drive shaft 34 has a one-to-one correspondence with the steered angle. The target angle calculation process M50 may be, for example, a process of calculating the target angle θp* from the reaction force command value Tr* using a model of the steering system 10. In this model, for example, the reaction force command value Tr* may be regarded as torque applied to the transmission shaft 14 on the assumption that the input shaft 14a and the output shaft 14b are mechanically connected.

An angle control process M52 is a process of calculating a manipulated variable of control in which the rotation angle of the drive shaft 34 is a controlled variable and the target angle θp* is a target value of the controlled variable. This manipulated variable is a steered torque command value Tt* that is a command value for the torque for the steering motor 80. The rotation angle of the drive shaft 34 is calculated by the PU 42 using the rotation angle θt as an input.

A steered operation signal generation process M54 is a process of operating the inverter 82 in response to input of the steered torque command value Tt*. The steered operation signal generation process M54 includes a process of calculating a manipulated variable of control in which the torque of the steering motor 80 is a controlled variable and a value obtained by converting the steered torque command value Tt* to the torque of the steering motor 80 is a target value of the controlled variable. The rotation angle θt and the currents iut, ivt, iwt are referenced when calculating the manipulated variable. The steered operation signal generation process M54 includes a process of operating the inverter 82 in accordance with the manipulated variable. An operation signal MSt for the inverter 82 is shown in FIG. 5. However, the operation signal MSt is actually an individual operation signal for each switching element of the inverter 82.

### <Other Embodiments>

The above embodiments can be modified as described below. The above embodiments and the modifications described below can be combined as long as no technical contradictions arise.

### "Regarding Feedback Process"

### (a) A process in which the difference between the steering torque Th and the target steering torque Th* is input

The process in which the difference between the steering torque Th and the target steering torque Th* is input is not limited to the PD manipulated variable calculation process M16. For example, the manipulated variable of this process may be a sum of an output value of a proportional element to which this difference is input, an output value of a differential element to which this difference is input, and an output value of an integral element according to this difference. For example, the manipulated variable of this process may be a sum of an output value of a proportional element to which this difference is input and an output value of an integral element according to this difference. For example, the manipulated variable of this process may be a sum of an output value of a differential element to which this difference is input and an output value of an integral element according to this difference. For example, the manipulated variable of this process may be any one of the following output values: an output value of a proportional element to which this difference is input, an output value of a differential element to which this difference is input, and an output value of an integral element according to this difference.

### (b) Regarding the manipulated variable according to the difference between the output of the nominal model Pn and the steering torque Th

- The second disturbance calculation process M36 need not necessarily be a process of calculating the estimated second disturbance torque de0 by using both the inverse model of the nominal model Pn and the filter Hd. For example, the second disturbance calculation process M36 may be a process of calculating the estimated second disturbance torque de0 by using the inverse model of the nominal model Pn alone.

### (c) Others

- The feedback process need not necessarily include both a process in which the difference between the steering torque Th and the target steering torque Th* is input, and a process of calculating a manipulated variable in accordance with the difference between the output of the nominal model Pn and the steering torque Th. For example, the feedback process may be configured by the PD manipulated variable calculation process M16 alone. Altematively, for example, the feedback process may be configured by the disturbance observer M30 alone.

### "Regarding Target Steering Torque Calculation Process M10"

- The target steering torque calculation process M10 need not necessarily be a process of calculating the target steering torque Th* based on the axial force Fa. For example, the target steering torque calculation process M10 may be a process of calculating the target steering torque Th* in response to input of the steering torque Th and the assist torque Ta.
   - The vehicle speed SPD does not have to be included in the input to the target steering torque calculation process M10.
- The input to the target steering torque calculation process M10 is not limited to that described above. For example, two or more sampled values of the steering angle obtained at different sampling timings may be included in the input to the target steering torque calculation process M10. In that case, a process of distinguishing between when the steering wheel 12 is tumed and when the steering wheel 12 is turned back can be implemented in accordance with the input. Therefore, for example, the absolute value of the target steering torque Th* may be set to a larger value when the steering wheel is tumed than when the steering wheel is tumed back.

### "Regarding Open-Loop Manipulated Variable Calculation Process"

- The input to the open-loop manipulated variable calculation process M12 is not limited to the target steering torque Th*. For example, the input to the open-loop manipulated variable calculation process M12 may be the axial force Fa. In that case, the transfer function of the open-loop manipulated variable calculation process M12 may be a product of a transfer function for calculating the target steering torque Th* from the axial force Fa and the inverse model of the nominal model Pn.

### "Regarding Operation Process"

- In the process shown in FIG. 2, the operation process is a process in which the torque of the assist motor 30 is a controlled variable and the assist torque Ta is a target value of the controlled variable. However, the operation process is not limited to this. For example, the operation process may include a process of calculating a target value of the rotation angle of the assist motor 30 from the axial force Fa. In that case, the operation process is a process of operating the inverter 32 in accordance with a manipulated variable of feedback control in which the rotation angle of the assist motor 30 is a controlled variable. The axial force Fa is a sum of the steering torque Th and a value obtained by correcting a manipulated variable determined from the open-loop manipulated variable Mff and the feedback manipulated variable Mfb with the estimated second disturbance torque de. Accordingly, the operation process is a process of operating the inverter 32 in accordance with a value obtained by correcting, in accordance with the estimated second disturbance torque de, the manipulated variable determined from the open-loop manipulated variable Mff and the PD manipulated variable Mpd. This is a process of controlling the torque of the assist motor 30 so as to generate torque in accordance with the value obtained by correcting, in accordance with the estimated second disturbance torque de, the manipulated variable determined from the open-loop manipulated variable Mff and the PD manipulated variable Mpd.
   - In the process shown in FIG. 5, the operation process is a process in which the torque of the reaction motor 70 is a controlled variable and the reaction force command value Tr* is a target value of the controlled variable. However, the operation process is not limited to this. For example, the operation process may include a process of calculating a target value of the rotation angle of the reaction motor 70 from the axial force Fa. In that case, the operation process is a process of operating the inverter 72 in accordance with a manipulated variable of feedback control in which the rotation angle of the reaction motor 70 is a controlled variable.

### "Regarding Steering Control Device"

- In the configuration illustrated in FIG. 4, the device that operates the reaction motor 70 and the device that operates the steering motor 80 may be separate devices.
   - The steering control device is not limited to a configuration including the PU 42 and the storage device 44 and executing software processing. For example, the steering control device may include a dedicated hardware circuit such as an ASIC that executes at least part of the processes executed in the above embodiments. That is, the steering control device may include a processing circuit with any of the following configurations (a) to (c).
      (a) A processing circuit including: a processing device that executes all of the above processes in accordance with a program; and a program storage device such as a storage device that stores the program.
         (b) A processing circuit including: a processing device that executes part of the above processes in accordance with a program; a program storage device; and a dedicated hardware circuit that executes the rest of the processes.
      (c) A processing circuit including a dedicated hardware circuit that executes all of the above processes.
      The number of software execution devices including a processing device and a program storage device may be two or more. The number of dedicated hardware circuits may be two or more.

### "Regarding Steering Control Method"

- The entity that executes the various controls described above is not limited to a steering control device mounted on a vehicle. For example, part of the processes for control to the target steering torque Th*, such as the disturbance observer M30, may be executed by a mobile terminal of the driver.

### "Regarding Input Unit"

- An input unit to which the steering torque is input is not limited to the steering wheel 12. "Regarding State in Which Power Transmission Is Disconnected"
- The configuration that implements the state in which power transmission between the input unit to which the steering torque is input and the steered wheels 20 is disconnected is not limited to the configuration illustrated in FIG. 4. For example, a clutch may be provided between the input shaft 14a and the output shaft 14b.

### "Regarding Steering System"

- For example, an actuator with the assist motor 30 or the steering motor 80 disposed coaxially with the steered shaft 16 may be used as an actuator that steers the steered wheels 20. Altematively, for example, an actuator that transmits the power of the assist motor 30 or the steering motor 80 to the steered shaft 16 via a belt speed reducer using a ball screw mechanism may be used.
   - The steering system that can change the relationship between the steering angle and the steered angle is not limited to the steering system in which power transmission between the steering wheel 12 and the steered wheels 20 is disconnected as illustrated in FIG. 5. For example, the steering system may be configured to change the relationship between the steering angle and the steered angle by using a variable gear as a gear that allows power transmission between the steering wheel 12 and the steered wheels 20.

### "Others"

- In the above embodiments, for convenience of explanation, the assist torque Ta is a command value for the torque of the assist motor 30. However, the present invention is not limited to this. The assist torque Ta may be, for example, a command value for the torque of the drive shaft 34. In that case, the operation signal generation process M40 includes a process of converting the assist torque Ta to the torque of the assist motor 30.
   - **In** the above embodiment, for convenience of explanation, the reaction force command value Tr* is a command value for the torque of the reaction motor 70. However, the present invention is not limited to this. For example, on the premise that a reduction mechanism is provided between the reaction motor 70 and the transmission shaft 14, the reaction torque command value Tr* may be a command value for the torque of an appropriate rotating body in the reduction mechanism. **In** that case, the steering operation signal generation process M40a includes a process of converting the reaction force command value Tr* to the torque of the reaction motor 70.

## Claims

1. A steering control device configured to execute a feedback process, an operation process, and a reduction process, wherein:
the feedback process is a process of calculating a feedback manipulated variable;
the feedback manipulated variable is a manipulated variable of feedback control in which a detected value of steering torque is a controlled variable;
the steering torque is torque input by a driver to a steering system;
the operation process is a process of controlling torque of a motor of the steering system using the feedback manipulated variable as an input;
the reduction process is a process of reducing an absolute value of the feedback manipulated variable when a magnitude of target steering torque is greater than or equal to a predetermined value; and
the target steering torque is a target value of the steering torque.

2. The steering control device according to claim 1, wherein the reduction process includes a process of reducing the feedback manipulated variable when the magnitude of the target steering torque is greater than an upper limit value of a detectable range of a sensor configured to detect the steering torque, compared to when the magnitude is smaller than the upper limit value.

3. The steering control device according to claim 1, wherein:
the reduction process includes a process of reducing the feedback manipulated variable when the magnitude of the target steering torque is greater than a threshold, compared to when the magnitude is smaller than the threshold; and
the threshold is smaller than an upper limit value of a detectable range of a sensor configured to detect the steering torque.

4. The steering control device according to claim 3, wherein the reduction process is a process of setting the feedback manipulated variable serving as an input to the operation process to a value obtained by multiplying the feedback manipulated variable output from the feedback process by a gain, and changing the gain in accordance with the magnitude of the target steering torque under a condition in which, when the magnitude of the target steering torque is greater than or equal to the threshold and less than or equal to the upper limit value, the gain when the magnitude of the target steering torque is large is less than or equal to the gain when the magnitude of the target steering torque is small.

5. The steering control device according to claim 1, wherein:
the steering control device is configured to execute an open-loop manipulated variable calculation process;
the open-loop manipulated variable calculation process is a process of calculating an open-loop manipulated variable using the target steering torque as an input, the open-loop manipulated variable being a manipulated variable of open-loop control in which the steering torque is a controlled variable; and
the operation process is a process of controlling the torque of the motor using the feedback manipulated variable and the open-loop manipulated variable as inputs.

6. The steering control device according to claim 1, wherein the feedback process includes a process of calculating the feedback manipulated variable using an output value of at least one of following elements: a proportional element and a derivative element each of which receives as an input a difference between the detected value of the steering torque and the target steering torque.

7. The steering control device according to claim 1, wherein the feedback process includes a process of calculating the feedback manipulated variable using the detected value as an input and based on a difference between an output of a nominal model when an input of the operation process is input to the nominal model and the detected value.

8. A steering control method comprising executing a feedback process, an operation process, and a reduction process, wherein:
the feedback process is a process of calculating a feedback manipulated variable;
the feedback manipulated variable is a manipulated variable of feedback control in which a detected value of steering torque is a controlled variable;
the steering torque is torque input by a driver to a steering system;
the operation process is a process of controlling torque of a motor of the steering system using the feedback manipulated variable as an input;
the reduction process is a process of reducing an absolute value of the feedback manipulated variable when a magnitude of target steering torque is greater than or equal to a predetermined value; and
the target steering torque is a target value of the steering torque.
